# NEUE EUROPÄISCHE PATENTSCHRIFT

(11) **EP 0 313 871 B2**
(45) Veröffentlichungstag und Bekanntmachung des Hinweises auf die Entscheidung über den Einspruch: **17.12.1997**
(45) Hinweis auf die Patenterteilung: 22.07.1992
(21) Anmeldenummer: 88116313.3
(22) Anmeldetag: 03.10.1988
(51) Int. Cl.: F27B 7/20, F27D 13/00, C04B 7/43

(54) **Vorrichtung und Verfahren zur Wärmebehandlung von feinkörnigem Gut**
Process and device for the thermal treatment of fines
Dispositif et procédé de traitement thermique de matériaux à grains fins

(30) Priorität: 30.10.1987 DE 3736905
(43) Veröffentlichungstag der Anmeldung: 03.05.1989
(73) Patentinhaber: KRUPP POLYSIUS AG, 59269 Beckum (DE)
(72) Erfinder: Dürr, Manfred, Dipl.-Ing., D-4740 Oelde (DE); Unland, Georg, Dr. Ing., D-4722 Ennigerloh (DE); Driemeier, Günter, Dipl.-Ing., D-4543 Lienen (DE); Krützner, Karl, D-4720 Beckum (DE); Schmits, Heinz-Herbert, Dipl.-Ing., D-4840 Rheda-Wiedenbrück (DE); von Seebach, Michael, Dr. Ing., D-4722 Ennigerloh (DE); Heinemann, Otto, Dipl.-Ing., D-4722 Ennigerloh (DE); Rother, Wolfgang, Dipl.-Ing., D-4740 Oelde (DE); Dreyer, Dieter, Dipl.-Ing., D-4722 Ennigerloh (DE)
(74) Vertreter: Tetzner, Volkmar, Dr.-Ing. Dr. jur.

(56) Entgegenhaltungen:
- CS-A- 112 935
- DE-A- 2 248 030
- DE-A- 3 520 058
- FR-A- 1 418 655
- FR-A- 2 175 381
- FR-A- 2 263 204
- FR-A- 2 329 959
- FR-A- 2 341 113
- FR-A- 2 366 231
- FR-A- 2 505 813
- FR-A- 2 545 916
- GB-A- 1 563 918
- ZEMENT-KALK-GIPS, Band 39, Nr. 7, Juli 1986, Seiten 351-366, Wiesbaden, DE; L. KWECH: "Stand der Vorcalciniertechnik in der Zementindustrie"
- ZKG - ZEMENT/KALK/GIPS, Band 40, Nr. 9, September 1987, Seiten 474-476, Wiesbaden, DE; Referate: "Feuerfeste Baustoffe in japanischen Schwebegas-Wärmetauscheröfen mit und ohne Vorcalcinationsanlagen"
- ZEMENT-KALK-GIPS, Band 36, Nr. 4, April 1983, Seiten 199-207, Wiesbaden-Biebrich, DE; Y. UEDA et al.: "Coal firing of reinforced suspension preheater (RSP) process"
- Revue, Generalae Thermique no.248-249, August/September 1982, Seiten 671-689
- Operational experiences of RSP Processes at Ofunato, VDZ Kongress 1977, Bauerlag GmbH Wiesbaden und Berlin

## Beschreibung

Die Erfindung betrifft eine Vorrichtung sowie ein Verfahren zur Wärmebehandlung von feinkörnigem Gut.

Eine Vorrichtung dieser Art ist beispielsweise durch die DE-A-22 48 030 bekannt. Die beiden Leitungsstränge der verzweigten Tertiärluftleitung besitzen hierbei gemäß einem Ausführungsbeispiel einen etwa horizontalen Verlauf und gemäß einem weiteren Ausführungsbeispiel einen teilweise horizontalen Verlauf, wobei die Gutaustragsleitung der zweituntersten Stufe des Zyklonvorwärmers in den einen Leitungsstrang der Tertiärluftleitung an einer Stelle einmündet, die etwa auf gleicher Höhe liegt, auf der dieser Leitungsstrang der Tertiärluftleitung an die Brennkammer angeschlossen ist.

Der Erfindung liegt die Aufgabe zugrunde, eine Vorrichtung so auszubilden, daß unter gleichzeitiger Verbesserung der Verbrennungsbedingungen in der Brennkammer die Bauhöhe des Zyklonvorwärmers wesentlich verringert wird.

Weiterhin ist es Aufgabe der Erfindung, ein Verfahren so auszubilden, daß die Wärmeübertragung beim Start der Verbrennung so weit in Grenzen gehalten wird, daß sich ein höheres Temperaturniveau als Calciniertemperatur (ca. 850° C) ausbildet und auf diese Weise eine bessere Verbrennung vor allem von reaktionsträgen Brennstoffen ermöglicht wird.

Diese Aufgaben werden erfindungsgemäß durch die Merkmale der Ansprüche 1 und 5 gelöst. Zweckmäßige Ausgestaltungen der Erfindung sind Gegenstand der Unteransprüche.

Bei der erfindungsgemäßen Vorrichtung besitzt der verzweigte Teil der Tertiärluftleitung einen ansteigenden Verlauf, wobei die Gutaustragsleitung der zweituntersten Stufe des Zyklonvorwärmers in den einen Leitungsstrang der Tertiärluftleitung an einer Stelle einmündet, die tiefer als die Stelle liegt, an der dieser Leitungsstrang der Tertiärluftleitung an die Brennkammer angeschlossen ist. Eine solche Ausführung gewährleistet nicht nur eine gute Auflösung des pneumatisch der Brennkammer zugeführten Gutes sowie ausgezeichnete Verbrennungsbedingungen, sondern ermöglicht darüber hinaus eine sehr tiefe Anordnung der zweituntersten Stufe des Zyklonvorwärmers und damit eine beträchtliche Verringerung der Bauhöhe des gesamten Zyklonvorwärmers.

Die Erfindung ist in der Zeichnung schematisch veranschaulicht. Es zeigen
- Fig.1: eine Schemadarstellung einer erfindungsgemäßen Vorrichtung.
- Fig.2: ein Detail einer Variante,
- Fig.3: ein Diagramm.

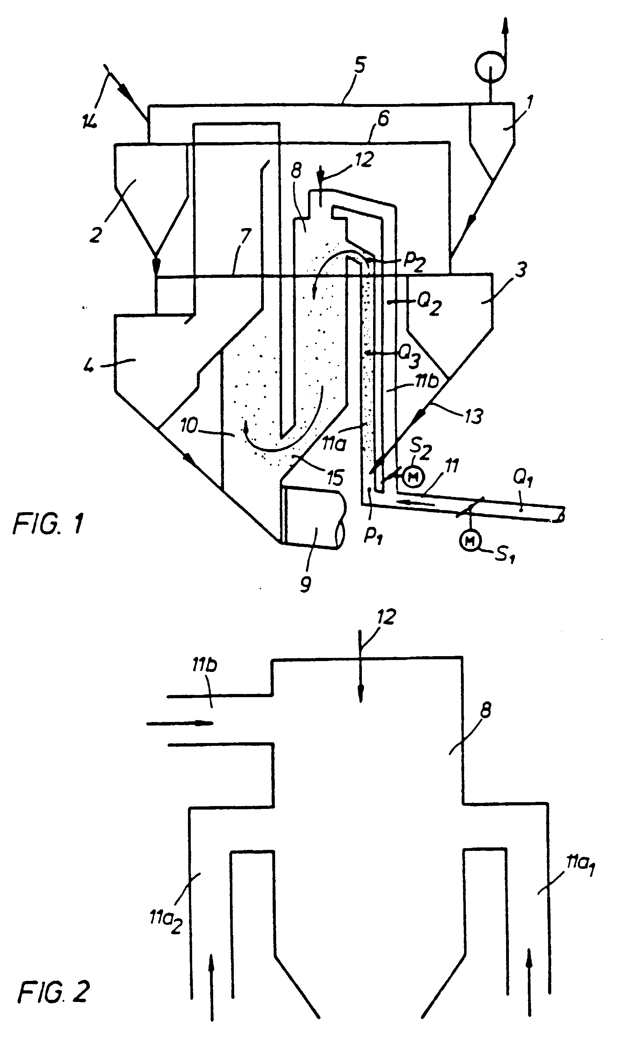

Die in Fig.1 schematisch dargestellte Vorrichtung zur Wärmebehandlung von feinkörnigem Gut, wie Zementrohmaterial, enthält einen mehrstufigen Zyklonvorwärmer, der aus den Zyklonen 1, 2, 3, 4 und den sie verbindenden, nur schematisch dargestellten Gasleitungen 5, 6, 7 besteht.

Die Anlage enthält weiterhin eine zur Vorcalcination des vorgewärmten Gutes dienende Brennkammer 8, einen Drehrohrofen 9 zum Fertigbrennen des vorcalcinierten Gutes sowie einen nicht dargestellten Kühler zum Kühlen des fertiggebrannten Gutes.

Der Drehrohrofen 9 ist mit der untersten Stufe (Zyklon 4) des Vorwärmers über einen Misch- und Reaktionsreaktor 10 verbunden, der zunächst ansteigt und nach Umlenkung wieder nach unten zum Zyklon 4 geführt ist. Auf diese Weise wird eine für den Restausbrand des in der Brennkammer 8 zugesetzten Brennstoffes und für die Ausnutzung des Wärmeinhaltes der Abgase des Drehrohrofens 9 vorteilhafte große Leitungslänge erreicht.

Eine vom (nicht dargestellten) Kühler zur Brennkammer 8 führende Tertiärluftleitung 11 verzweigt sich an ihrem brennkammerseitigen Ende in zwei Leitungsstränge 11a, 11b, die beide mit der Brennkammer 8 verbunden sind. Der Leitungsstrang 11a mündet am oberen Ende der zylindrischen Brennkammer 8 an einer Umfangsstelle ein, während der Leitungsstrang 11b über die Decke der Brennkammer 8 eingeführt ist. Im Bereich dieser Anschlußstelle des Leitungsstranges 11b ist auch eine Brennstoffzuführung 12 vorgesehen. Die Gutaustragsleitung 13 der zweituntersten Stufe (Zyklon 3) des Zyklonvorwärmers mündet in den Leitungsstrang 11a der Tertiärluftleitung an einer Stelle ein, die wesentlich tiefer als die Stelle liegt, an der dieser Leitungsstrang 11a an die Brennkammer 8 angeschlossen ist. Der verzweigte Teil der Tertiärluftleitung 11, d.h. die Leitungsstränge 11a und 11b, besitzen einen ansteigenden Verlauf (beim dargestellten Ausführungsbeispiel annähernd vertikal).

Aufgrund dieser Führung der Tertiärluftleitung 11 und des Anschlusses der Gutaustragsleitung 13 an einen tiefliegenden Punkt der Tertiärluftleitung kann der Zyklon 3 des Vorwärmers (der bisher höher als die Brennkammer 8 angeordnet werden mußte) sehr tief angeordnet werden. Da sich infolgedessen auch die Höhenlage der folgenden Stufen (Zyklone 1, 2) des Vorwärmers verringert, ergibt sich insgesamt eine sehr reduzierte Bauhöhe des gesamten Zyklonvorwärmers.

Das feinkörnige Gut, beispielsweise Zementrohmaterial, wird bei 14 in die Gasleitung 5 eingeführt, im Zyklon 1 abgeschieden, über die Gasleitung 6 dem Zyklon 2 zugeführt, gelangt dann über die Gasleitung 7 in den Zyklon 3 und wird über die Gutaustragsleitung 13 in den Leitungsstrang 11a der Tertiärluftleitung 11 eingeführt und in dieser Leitung pneumatisch in die Brennkammer 8 gefördert. Das im Zyklonvorwärmer vorgewärmte Gut wird in der Brennkammer 8 hoch erhitzt und vorcalciniert. Um einen guten Verbrennungsstart und einen optimalen Ausbrand des über die Brennstoffzuführung 12 zugeführten Brennstoffes zu erreichen, wird über den Leitungsstrang 11b mehlfreie Verbrennungsluft in den oberen Bereich der Brennkammer 8 eingeführt. Die Aufteilung der Tertiärluft auf die Leitungsstränge 11a und 11b kann durch Klappen S₁ und S₂ eingestellt werden.

An ihrem unteren Ende ist die Brennkammer 8 über eine schurrenartige Verbindung 15 mit dem Reaktor 10 verbunden. Über diese Verbindung 15 werden die Abgase der Brennkammer 8 und das vorcalcinierte Gut in den Misch- und Reaktionsreaktor 10 eingeführt. Beim Durchströmen dieses Reaktors 10 findet der Restausbrand des in der Brennkammer 8 zugesetzten Brennstoffes statt, und das Gut erfährt hierbei eine weitere Wärmebehandlung und Entsäuerung. Nach Abscheidung im Zyklon 4 gelangt das nahezu vollständig calcinierte Gut in den Drehrohrofen 9 und anschließend in den (nicht dargestellten) Kühler.

Der Leitungsstrang 11a der Tertiärluftleitung 11, an den die Gutaustragsleitung 13 des Zyklons 3 angeschlossen ist, mündet zweckmäßig annähernd tangential in die Brennkammer 8 ein.

Der nicht mit der Gutaustragsleitung 13 verbundene andere Leitungsstrang 11b der Tertiärluftleitung 11 mündet an einer Stelle (beim dargestellten Ausführungsbeispiel in der Decke) in die Brennkammer 8 ein, die der Brennstoffzuführung 12 näher gelegen ist als die Einmündung des mit der Gutaustragsleitung 13 verbundenen Leitungsstranges. Auf diese Weise wird erreicht, daß der Brennstoff zunächst in reiner Luft zündet, ehe er mit dem Gut in Berührung kommt.

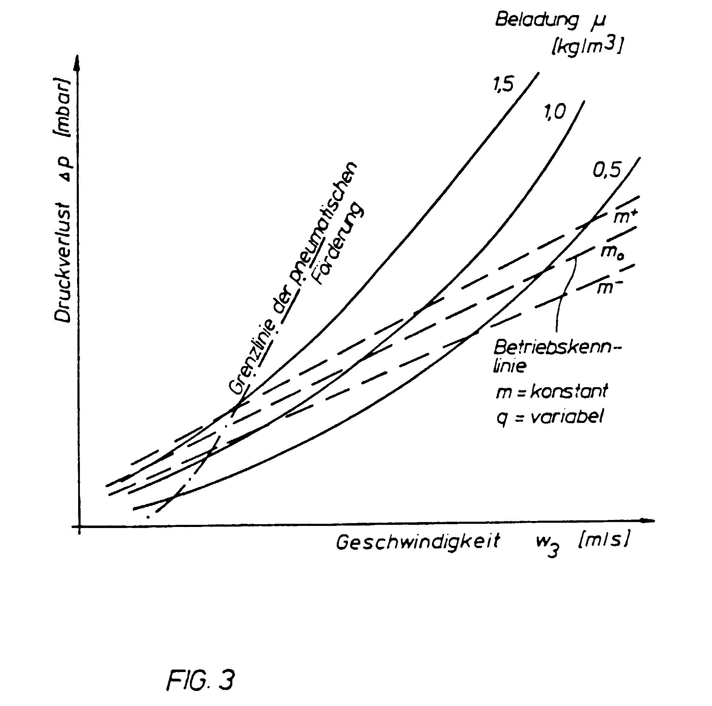

Bei der in Fig.2 dargestellten Variante verzweigt sich der mit der Gutaustragsleitung 13 verbundene Leitungsstrang 11a der Tertiärluftleitung in wenigstens zwei weitere Teilstränge 11a₁, 11a₂, die an unterschiedlichen Umfangsstellen, vorzugsweise tangential, in die Brennkammer 8 einmünden. Der Anschluß des Leitungsstranges 11b, der reine Luft führt, liegt höher, so daß sich der über die Brennstoffzuführung 12 zugeführte Brennstoff zunächst in reiner Luft entzündet, ehe er mit dem über die Teilstränge 11a₁, 11a₂ pneumatisch zugeführten Gut in Berührung kommt.

Der Calcinator der erfindungsgemäßen Vorrichtung ist zweistufig. Die erste Stufe wird durch die Brennkammer 8 und die zweite Stufe durch den Misch- und Reaktionsreaktor 10 gebildet. Die Brennkammer 8 soll dabei vor allem den Ausbrand von schlecht reaktiven Brennstoffen ermöglichen. indem im Kern dieser Brennkammer eine Temperatur gefahren wird, die über der Calciniertemperatur liegt. Typischerweise liegt bei schlecht reaktivem Brennstoff der Ausbrand in der Brennkammer 8 bei ca. 30 bis 40 % und die Vorcalcination bei 40 bis 50 %. Der Rest des Ausbrandes sowie die nahezu vollständige Entsäuerung des Gutes geschieht im nachgeschalteten Misch- und Reaktionsreaktor 10.

Die gesamte Tertiärluftmenge Q₁ sowie die Menge Q₂ des der Brennkammer 8 als reine Verbrennungsluft (ohne Gutbeladung) zugeführten zweiten Teilstromes der Tertiärluft werden mittels einer geeigneten Mengenmeßausrüstung (z.B. einer Wirkdruckmeßblende) über eine Drosselstelle erfaßt. Die gesamte Tertiärluftmenge Q₁ wird mittels der Klappe S₁ nach verfahrenstechnischen Erfordernissen verändert.

Die Mengemeßwerte Q₁ und Q₂ werden einem Regler aufgeschaltet, der eine Quotientenbildung durchführt. Das Ergebnis wird vom Regler selbsttätig mit einem vom Bedienungspersonal wählbaren Quotientensollwert verglichen. Bei einer Abweichung zwischen dem aus den Messungen ermittelten Quotienten-lstwert und dem Quotienten-Sollwert verstellt der Regler automatisch über die Klappe S₂ die Menge Q₂ des zweiten Teilstromes der Tertiärluft, bis eine Übereinstimmung von Ist- und Sollwert erreicht ist. Diese Regelung kann mittels eines handelsüblichen Verhältnisreglers erfolgen.

Durch diese Maßnahme wird erreicht, daß sich unabhängig von der über die Klappe S₁ erfolgten, nach verfahrenstechnischen Erfordernissen vorgenommenen Einstellung der gesamten Tertiärluftmenge Q₁ der Brennkammer 8 eine prozentual konstante Teilmenge Q₂ der Gesamtmenge Q₁ zugeführt wird.

Zur Kontrolle, ob die Menge Q₃ des für den pneumatischen Guttransport benutzten ersten Teilstromes der Tertiärluft für den Transport des aufgegebenen vorgewärmten Gutes ausreicht, erfolgt zweckmäßig eine Differenzdruckmessung (Ap = p₂ - p₁ ) in dem mit Gut beladenen ersten Teilstrom der Tertiärluft.

Fig.3 veranschaulicht die wesentlichen Zusammenhänge. Das Diagramm zeigt den Druckverlust Δp im Leitungsstrang 11a in Abhängigkeit von der Gasgeschwindigkeit w₃ in diesem Leitungsstrang 11a. Parameter ist die Beladung µ [kg Gut/m³ Luft].

Aufgrund des Widerstandsgesetzes ergibt sich eine parabelförmige Abhängigkeit für unterschiedliche Beladung µ.

Strichpunktiert ist die Grenzlinie für eine pneumatische Förderung eingetragen. Bei höherer Beladung muß eine höhere Gasgeschwindigkeit w3 vorgesehen werden, damit kein Gut "durchfällt". Für jede Beladung ergibt sich damit ein bestimmter Grenzwert des Druckverlustes Δp, der nicht unterschritten werden darf.

Wird die Anlage angefahren (und hierbei ist eine Überwachung der pneumatischen Gutförderung im Leitungsstrang 11a besonders wichtig), so sind zunächst niedrige Werte der Beladung µ und der Gasgeschwindigkeit w₃ vorhanden. Im Betriebspunkt ist dagegen ein höherer Wert der Beladung µ vorhanden, was eine entsprechend höhere Gasgeschwindigkeit w₃ und einen entsprechend höheren Mindestwert des Druckverlustes Δp bedingt. Der jeweils einzuhaltende Mindestwert des Druckverlustes Δp ist daher in Abhängigkeit von der jeweiligen Beladung µ zu wählen.

Nimmt man die geförderte Gutmenge m als konstant an und ist der Quotient q = Q₂/Q₁ variabel (er wird vom Bedienungspersonal in Abhängigkeit von den verfahrenstechnischen Erfordernissen gewählt), so ergibt sich im Idealfall eine lineare Betriebskennlinie (in Fig.3 gestrichelt eingetragen). Bei einer Änderung der geförderten Gutmenge verlagert sich diese Betriebskennlinie nach oben (Gutzunahme) oder unten (Gutabnahme).

Abweichend von der geschilderten Verfahrensweise ist es auch möglich, die Menge Q₂ des als reine Verbrennungsluft zugeführten zweiten Teilstromes der Tertiärluft der Brennerleistung der Brennkammer 8 nachzuregeln. In diesem Falle wird dann auf die oben erwähnte prozentuale Aufteilung zwischen Q₁ und Q₂ verzichtet.

Weiterhin kann die Klappe S₁ auch der Brennerleistung der Brennkammer 8 nachgeregelt werden oder umgekehrt. Hierbei bleibt die prozentuale Aufteilung nach Q₁ und Q₂ erhalten.

Durch die Erfassung von Q₁ und Q₂ ist auch Q₃ bekannt. Die Erfassung des Differenzdruckes Δp ermöglicht damit die Bestimmung der Menge des geförderten vorgewärmten Gutes. Hierdurch lassen sich eine Reihe von interessanten Betriebsgrößen bestimmen, beispielsweise der Gutkreislauf innerhalb der unteren Stufen des Zyklonvorwärmers und des Calcinators, die Gutbeladung im Calcinator (d.h. in der Brennkammer 8 und im Reaktor 10), die Anpassung der Calcinator-Brennerleistung an den Wärmebedarf des Gutes für einen vorgegebenen Entsäuerungsgrad (unter Verwendung der Temperatur als Ersatzgröße) usw..

## Patentansprüche

1. Vorrichtung zur Wärmebehandlung von feinkörnigem Gut, wie Zementrohmaterial, enthaltend
a) einen mehrstufigen Zyklonvorwärmer (1, 2, 3, 4) zur Vorwärmung des Gutes,
b) eine zur Vorcalcination des vorgewärmten Gutes dienende Brennkammer (8),
c) einen zur nahezu vollständigen Calcination des vorcalcinierten Gutes dienenden Misch- und Reaktionsreaktor (10),
d) einen über den Misch- und Reaktionsreaktor (10) mit dem Zyklonvorwärmer verbundenen Drehrohrofen (9) zum Fertigbrennen des calcinierten Gutes,
e) einen Kühler zum Kühlen des fertiggebrannten Gutes,
f) eine vom Kühler zur Brennkammer (8) führende Tertiärluftleitung (11), die sich in wenigstens zwei Leitungsstränge (11a, 11b) verzweigt, die beide mit der Brennkammer (8) verbunden sind,
g) eine an die zweitunterste Stufe (3) des Zyklonvorwärmers angeschlossene Gutaustragsleitung (13), die in den einen Leitungsstrang (11a) der Tertiärluftleitung (11) einmündet, so daß das über die Gutaustragsleitung (13) ausgetragene Gut der Brennkammer (8) zugeführt wird, wobei der nicht mit der Gutaustragsleitung (13) verbundene andere Leitungsstrang (11b) der Tertiärluftleitung (11) an einer Stelle in die Brennkammer (8) einmündet, die der Brennstoffzuführung (12) näher gelegen ist als die Einmündung des mit der Gutaustragsleitung (13) verbundenen Leitungsstranges (11a),
h) eine zwischen der Brennkammer (8) und dem Mischund Reaktionsreaktor (10) vorgesehene Verbindung (15), über die die Abgase der Brennkammer und das vorcalcinierte Gut in den Misch- und Reaktionsreaktor eingeführt werden, wobei
i) der verzweigte Teil der Tertiärluftleitung (11) einen ansteigenden Verlauf besitzt, und
k) die Gutaustragsleitung (13) der zweituntersten Stufe (3) des Zyklonvorwärmers in den einen Leitungsstrang (lla) der Tertiärluftleitung (11) an einer Stelle ein mündet, die tiefer als die Stelle liegt, an der dieser Leitungsstrang (lla) der Tertiärluftleitung an die Brennkammer (8) angeschlossen ist.

2. Vorrichtung nach Anspruch 1, dadurch gekennzeichnet, daß die Brennkammer (8) vertikal angeordnet ist, die beiden Leitungsstränge (11a, 11b) der Tertiärluftleitung (11) in den oberen Teil der Brennkammer einmünden und die zum Misch- und Reaktionsreaktor (10) führende Verbindung (15) an den unteren Teil der Brennkammer angeschlossen ist.

3. Vorrichtung nach Anspruch 1, dadurch gekennzeichnet, daß wenigstens der Leitungsstrang (11a) der Tertiärluftleitung (11), an den die Gutaustragsleitung (13) der zweituntersten Stufe (3) des Zyklonvorwärmers angeschlossen ist, annähernd tangential in die Brennkammer (8) einmündet.

4. Vorrichtung nach Anspruch 1, dadurch gekennzeichnet, daß sich der mit der Gutaustragsleitung (13) verbundene Leitungsstrang (11a) der Tertiärluftleitung (11) in wenigstens zwei weitere Teilstränge (11a₁, 11a₂) verzweigt, die an unterschiedlichen Stellen in die Brennkammer (8) einmünden

5. Verfahren zur Wärmebehandlung von feinkörnigem Gut, wie Zementrohmaterial, mit Hilfe einer Vorrichtung nach einem der Ansprüche 1 bis 4 wobei
a) das Gut in einem mehrstufigen Zyklonvorwärmer (1, 2, 3, 4) vorgewärmt wird,
b) das vorgewärmte Gut in einer Brennkammer (8) vorcalciniert
c)-und dann in einem Misch- und Reaktionsreaktor (10) nahezu vollständig calciniert wird.
d) das calcinierte Gut in einem Drehrohrofen (9) fertiggebrannt wird,
e) das fertiggebrannte Gut in einem Kühler gekühlt wird,
f) Tertiärluft in zwei Teilströmen vom Kühler der Brennkammer (8) zugeführt wird,
g) die Abgase der Brennkammer (8) sowie das in der Brennkammer vorcalcinierte Gut in den zwischen dem Drehrohrofen (9) und dem Zyklonvorwärmer (1, 2, 3, 4) angeordneten Misch- und Reaktionsreaktor (10) eingeführt werden,
h) mit Hilfe des ersten Teilstromes der Tertiärluft das vorgewärmte Gut in die Brennkammer (8) eingetragen wird und
i) der zweite Teilstrom der Tertiärluft ohne Gutbeladung als reine Verbrennungsluft der Brennkammer (8) zugeführt wird,
gekennzeichnet durch folgende weitere Merkmale:
k) es werden die gesamte Tertiärluftmenge (Q₁) sowie die Menge (Q₂) des zweiten Teilstromes der Tertiärluft gemessen und aus diesen Meßwerten ein Quotienten-lstwert gebildet, der mit einem Quotienten-Sollwert verglichen wird;
l) bei einer Abweichung von Ist- und Sollwert wird die Menge des zweiten Teilstromes der Tertiärluft im Sinne einer Übereinstimmung von Ist- und Sollwert geregelt.

6. Verfahren nach Anspruch 5, gekennzeichnet durch folgendes weiteres Merkmal:
m) in dem mit Gut beladenen ersten Teilstrom der Tertiärluft wird der Differenzdruck gemessen und im Hinblick auf das Unterschreiten eines in Abhängigkeit von der Beladung gewählten Differenzdruck-Grenzwertes überwacht.

## Claims

1. Apparatus for the heat treatment of fine-grained material, such as cement raw material, containing
a) a multi-stage cyclone preheater (1, 2,2 3, 4) for preheating the material,
b) a combustion chamber (8) which serves for precalcination of the preheated material,
c) a mixing and reaction reactor (10) which serves for almost complete calcination of the precalcined material,
d) a rotary kiln (9) which is connected to the cyclone preheater by the mixing and reaction reactor (10) for final burning of the calcined material,
e) a cooler for cooling the finally burnt material,
f) a tertiary air duct (11) which leads from the cooler to the combustion chamber (8) and branches into at least two branch ducts (11a, 11b) which are both connected to the combustion chamber (8),
g) a material discharge duct (13) which is connected to the second-lowest stage (3) of the cyclone preheater and opens into one branch duct (11a) of the tertiary air duct (11) so that the material discharged via this duct is delivered to the combustion chamber (8), whilst the other branch duct (11b) of the tertiary air duct (11) which is not connected to the material discharge duct (13) opens into the combustion chamber (8) at a point which is nearer to the fuel supply (12) than the opening of the branch duct (11a) which is connected to the material discharge duct (13),
h) a connection (15) which is provided between the combustion chamber (8) and the mixing and reaction reactor (10) and through which the exhaust gases from the combustion chamber and the precalcined material are introduced into the mixing and reaction reactor, wherein
i) the branched part of the tertiary air duct (11) extends upwards, and
k) the material discharge duct (13) from the second-lowest stage (3) of the cyclone preheater opens into one branch duct (11a) of the tertiary air duct (11) at a point which is lower than the point at which this branch duct (11a) of the tertiary air duct is connected to the combustion chamber (8).

2. Apparatus as claimed in Claim 1, characterised in that the combustion chamber (8) is arranged vertically, the two branch ducts (11a, 11b) of the tertiary air duct (11) open into the upper part of the combustion chamber and the connection (15) leading to the mixing and reaction reactor (10) is connected to the lower part of the combustion chamber.

3. Apparatus as claimed in Claim 1, characterised in that at least the branch duct (11a) of the tertiary air duct (11) to which the material discharge duct (13) of the second-lowest stage (3) of the cyclone preheater is connected opens approximately tangentially into the combustion chamber (8).

4. Apparatus as claimed in Claim 1, characterised in that the branch duct (11a) of the tertiary air duct (11) which is connected to the material discharge duct (13) is branched into at least two further branch ducts (11a₁, 11a₂) which open into the combustion chamber (8) at different points.

5. Method of heat treatment of fine-grained material, such as cement raw material, with the aid of apparatus as claimed in one of Claims 1 to 4, in which
a) the material is preheated in a multi-stage cyclone preheater (1, 2, 3, 4),
b) the preheated material is precalcined in a combustion chamber (8)
c) and then is almost completely calcined in a mixing and reaction reactor (10),
d) the calcined material is finally burnt in a rotary kiln (9),
e) the finally burnt material is cooled in a cooler,
f) tertiary air is delivered in two branch streams from the cooler to the combustion chamber (8),
g) the exhaust gases from the combustion chamber (8) and the material which has been precalcined in the combustion chamber are introduced into the mixing and reaction reactor (10) which is arranged between the rotary kiln (9) and the cyclone preheater (1, 2, 3, 4),
h) the preheated material is introduced into the combustion chamber (8) with the aid of the first branch stream of tertiary air and
i) the second branch stream of tertiary air is delivered without any material charge to the combustion chamber (8) as pure combustion air,
characterised by the following further features:
k) the total quantity of tertiary air (Q₁) and the quantity (Q₂) of the second branch stream of tertiary air are measured and from these measured values an actual value for the quotient is formed which is compared with a desired value for the quotient;
l) in the event of a deviation between the actual and desired values, the quantity of the second branch stream of tertiary air is regulated so as to cause the actual and desired values to coincide.

6. Method as claimed in Claim 5, characterised by the following further feature:
m) in the first branch stream of tertiary air which is charged with material the differential pressure is measured and is monitored with regard to falling below a boundary value for the differential pressure which is chosen as a function of the charge.

## Revendications

1. Dispositif de traitement thermique de matière à granulométrie fine, par exemple de matière première du ciment, comprenant :
a) un réchauffeur à cyclones à plusieurs étages (1, 2, 3, 4) pour le réchauffage de la matière,
b) une chambre de combustion (8) servant à la précalcination de la matière réchauffée,
c) un réacteur de mélange et de réaction (10) servant à la calcination pratiquement totale de la matière précalcinée,
d) un four tubulaire rotatif (9) qui est raccordé au réchauffeur à cyclones par l'entremise du réacteur de mélange et de réaction (10) qui est destiné à l'achèvement de la cuisson de la matière calcinée,
e) un réfrigérant de refroidissement de la matière dont la cuisson est achevée,
f) un conduit d'air tertiaire (11) menant du réfrigérant à la chambre de combustion (8) et se subdivisant en au moins deux lignes de conduits (11a, 11b) qui sont toutes deux raccordées à la chambre de combustion (8),
g) un conduit de décharge de matière (13) qui est raccordé à l'avant-dernier étage inférieur (3) du réchauffeur à cyclones et qui débouche dans l'une des lignes (11a) du conduit d'air tertiaire (11) de manière que la matière déchargée par le conduit de décharge de la matière (13) soit dirigée sur la chambre de combustion (8), l'autre ligne (11b) du conduit d'air tertiaire (11), qui n'est pas raccordée au conduit de décharge de matière (13), débouchant dans la chambre de combustion en un emplacement qui est plus proche de l'arrivée de combustible (12) que de l'embouchure de la ligne de conduit (11a) qui est raccordée au conduit de décharge de la matière (13),
h) une jonction (15) qui est prévue entre la chambre de combustion (8) et le réacteur de mélange et de réaction (10) et par laquelle les gaz évacués de la chambre de combustion et la matière précalcinée sont dirigés dans le réacteur de mélange et de réaction, dispositif dans lequel
i) la partie du conduit d'air tertiaire (11) qui est subdivisée en embranchements a une orientation ascendante et
h) le conduit (13) de décharge de la matière de l'avant dernier étage inférieur (3) du réchauffeur à cyclones débouche dans l'une (11a) des lignes du conduit d'air tertiaire (13) en un emplacement qui est à un niveau plus bas que celui de l'emplacement auquel cette ligne (11a) du conduit d'air tertiaire est raccordée à la chambre de combustion (8).

2. Dispositif selon la revendication 1, caractérisé en ce que la chambre de combustion (8) est disposée verticalement, les deux lignes (lla, llb) du conduit d'air tertiaire (11) débouchent dans la partie supérieure de la chambre de combustion et la jonction (15) menant au réacteur de mélange et de réaction (10) est raccordée à la partie inférieure de la chambre de combustion.

3. Dispositif selon la revendication 1, caractérisé en ce qu'au moins la ligne (lla) du conduit d'air tertiaire (11), à laquelle le conduit (13) de décharge de matière de l'avant-dernier étage inférieur (3) du réchauffeur à cyclones est raccordé, débouche à peu près tangentiellement dans la chambre de combustion (8).

4. Dispositif selon la revendication 1, caractérisé en ce que la ligne (11a) du conduit d'air tertiaire (11) qui est raccordée au conduit de décharge de matière (13) est subdivisée en au moins deux autres tronçons (11a₁, 11a₂) qui débouchent en des emplacements différents dans la chambre de combustion (8).

5. Procédé de traitement thermique de matière à granulométrie fine, par exemple de matière première du ciment, à l'aide d'un dispositif selon l'une des revendications 1 à 4, suivant lequel :
a) la matière est réchauffée dans un réchauffeur à cyclones à plusieurs étages (1, 2, 3, 4),
b) la matière réchauffée subit une précalcination dans une chambre de combustion (8)
c) et ensuite est calcinée pratiquement en totalité dans un réacteur de mélange et de réaction (10),
d) la matière calcinée subit l'achèvement de la cuisson dans un four tubulaire rotatif (9),
e) la matière dont la cuisson est achevée est refroidie dans un réfrigérant,
f) de l'air tertiaire est dirigé en deux courant partiels du réfrigérant à la chambre de combustion (8),
g) les gaz sortant de la chambre de combustion (8) ainsi que la matière précalcinée dans la chambre de combustion sont introduits dans le réacteur de mélange et de réaction (10) qui est disposé entre le four tubulaire rotatif (9) et le réchauffeur à cyclones (1, 2, 3, 4),
h) la matière réchauffée est introduite dans la chambre de combustion (8) à l'aide du premier courant partiel d'air tertiaire et
i) le deuxième courant partiel d'air tertiaire est dirigé sans charge de matière sous forme d'air comburant pur dans la chambre de combustion (8),
caractérisé par les autres particularités suivantes ;
k) le débit total d'air tertiaire (Q₁) ainsi que le débit (Q₂) du second courant partiel d'air tertiaire font l'objet de mesures et un quotient de valeur réelle qui est formé à l'aide de ces mesures est comparé avec une valeur de consigne de quotient,
l) en cas d'écart entre la valeur réelle et la valeur de consigne, le débit du second courant partiel d'air tertiaire est réglé dans le sens d'une coïncidence de la valeur réelle et de la valeur de consigne.

6. Procédé selon la revendication 5, caractérisé par l'autre particularité suivante :
m) la pression différentielle est mesurée dans le premier courant partiel d'air tertiaire qui est chargé de matière et elle fait l'objet d'un contrôle concernant le dépassement vers le bas d'un seuil de pression différentielle qui est adopté en fonction de la charge.
